# EUROPÄISCHE PATENTSCHRIFT

(11) **EP 4 161 740 B1**
(45) Veröffentlichungstag und Bekanntmachung des Hinweises auf die Patenterteilung: **22.10.2025**
(21) Anmeldenummer: 21730144.9
(22) Anmeldetag: 27.05.2021
(51) Int. Cl.: B25J 13/08, B25J 15/02, B25J 15/08, B25J 9/08, B25J 15/04

(54) **GREIFER MIT EINEM GREIFERGRUNDKÖRPER**
GRIPPER WITH GRIPPER'S BASE
GRIFFE AVEC BASE DE LA GRIFFE

(30) Priorität: 04.06.2020 DE 102020207036
(43) Veröffentlichungstag der Anmeldung: 12.04.2023
(73) Patentinhaber: KUKA Deutschland GmbH, 86165 Augsburg (DE)
(72) Erfinder: RIEDEL, Martin, 86165 Augsburg (DE); SCHULTE-REBBELMUND, Till, 86152 Augsburg (DE)
(74) Vertreter: Oelke, Jochen
(86) Internationale Anmeldenummer: PCT/EP2021/064197
(87) Internationale Veröffentlichungsnummer: WO 2021/244939

(56) Entgegenhaltungen:
- CN-A- 107 053 242
- CN-U- 208 375 324
- US-A1- 2018 264 660
- US-A1- 2019 168 396

## Beschreibung

Die Erfindung betrifft einen Greifer, aufweisend einen Greifergrundkörper, einen am Greifergrundkörper angeordneten Antriebsmotor und wenigstens ein Paar von Greiferfingern, die an dem Greifergrundkörper gelagert sind, wobei wenigstens einer der Greiferfinger von dem Antriebsmotor angetrieben ist, derart, dass durch eine angetriebene Bewegung des wenigstens einen Greiferfingers der Greifer geöffnet und geschlossen werden kann.

Die DE 10 2006 009 559 B3 beschreibt eine Greifervorrichtung in der Art einer künstlichen Hand mit wenigstens zwei an einem Rahmen angebrachten Fingern, von denen zumindest ein Finger längs einer dem Finger zuordenbaren Bewegungsebene mittels eines Aktors aus einer langgestreckten in eine gekrümmte Fingerposition überführbar ist, wobei der Finger einstückig ausgebildet ist und eine Längserstreckung aufweist, längs der wenigstens ein Bereich vorgesehen ist, um den der Finger in der ihm zugeordneten Bewegungsebene krümmbar ist, wobei der wenigstens eine Bereich, um den der Finger in der ihm zugeordneten Bewegungsebene krümmbar ist, gelenkartig ausgebildet ist, dass längs des wenigstens einen aktorisch krümmbaren Fingers ein Zug- und Druckkräfte übertragendes, länglich ausgebildetes Stellelement mit zwei Stellelementenden vorgesehen ist, von denen ein Stellelementende mit einem dem Rahmen gegenüberliegenden Fingerspitzenbereich des Fingers und das andere Stellelementende mit dem Aktor einstückig verbunden sind.

Darüber hinaus offenbarte CN 107053242 A einen Robotergreifer nach dem Oberbegriff des Anspruchs 1. Eine bionische Handklaue eines Roboters umfasst einen Finger 1 und ein Handgelenk 2. Das Handgelenk 2 umfasst einen Rahmen 9, einen Gleichstrommotor 10, ein Potentiometer 11 und eine Winde 12. Der Gleichstrommotor 10 ist fest an einer Motormontagefläche des Rahmens 9 angebracht. Das Potentiometer 11 ist über die Motorausgangswelle 13 fest mit der Potentimetermontagefläche 20 des Rahmens 9 verbunden. Und die Winde 12 ist fest mit dem Ende der Motorausgangswelle 13 befestigt.

US 20190168396 A1 dagegen konzentrierte sich auf Roboterarme und deren Anbauteile. Der Endeffektor 1400 umfasst eine Nabe 1405 und einen oder mehrere Finger 1408.

Aufgabe der Erfindung ist es, einen Greifer mit wenigstens einem Paar von Greiferfingern zu schaffen, der einen besonders zuverlässigen, kostengünstigen konstruktiven Aufbau aufweist und dennoch sehr flexibel für unterschiedlichste Greifanforderungen eingesetzt werden kann.

Die Aufgabe wird erfindungsgemäß gelöst durch einen Greifer, aufweisend einen Greifergrundkörper, einen am Greifergrundkörper angeordneten Antriebsmotor und wenigstens ein Paar von Greiferfingern, die an dem Greifergrundkörper gelagert sind, wobei wenigstens einer der Greiferfinger von dem Antriebsmotor angetrieben verstellbar am Greifergrundkörper gelagert ist, derart, dass durch eine von dem Antriebsmotor angetriebene Bewegung des wenigstens einen Greiferfingers der Greifer geöffnet und geschlossen werden kann, und wobei der Greifergrundkörper wenigstens eine sich von der Außenkontur des Greifergrundkörpers nach innen erstreckende Befestigungstasche aufweist, die ausgebildet ist zum Aufnehmen und zur manuell lösbaren Befestigung einer Funktionskomponente des Greifers an dem Greifergrundkörper.

Der Greifer ist ein robotischer Greifer, d.h. er kann ausgebildet sein, beispielsweise durch einen Roboterarm automatisch im Raum bewegt und betätigt, d.h. geöffnet und geschlossen zu werden.

Der Greifer kann, je nach Anwendung, als Einzelgreiferfinger, in Kombination mit festen oder beweglichen anderen Greifelementen oder in Kombination mit mehreren erfindungsgemäß ausgebildeten Greiferfingern, beispielsweise paarweise oder in Form einer anthropomorphen Greiferhand konfiguriert sein. Demgemäß können ein, zwei oder mehr Greiferfinger als Komponenten des Greifers verwendet werden. Der Greifer kann insbesondere bei teil- oder vollautomatisierten robotischen Greifaufgaben eingesetzt werden. Insofern kann der Greifer, der einen oder mehrere Greiferfinger aufweist, ein Greifwerkzeug bilden, das von einem Roboterarm in einem Handfahrbetrieb oder programmgesteuert automatisch gehandhabt, insbesondere bewegt und betätigt werden kann. Der Greifer kann insbesondere programmgesteuert automatisch geöffnet und geschlossen werden.

Der Greifergrundkörper bildet eine Basis, an welcher ein, zwei oder mehrere Greiferfinger gelagert sein können. Der Greifergrundkörper kann insoweit eine Handwurzel bilden, an welcher die ein, zwei oder mehreren Greiferfinger beweglich oder starr angeordnet sind, wobei der Greifergrundkörper an einem Werkzeugflansch eines Roboterarms oder eines analogen Handhabungsgerätes befestigt werden kann.

Die sich von der Außenkontur des Greifergrundkörpers nach innen erstreckende Befestigungstaschen stehen insoweit nicht über die Außenkontur des Greifergrundkörpers über, so dass trotz eines Wechsels der gewünschten Funktionskomponente keine Änderung an der betroffenen Befestigungstasche vorgenommen werden muss und in Folge dessen sich auch die Außenkontur des Greifergrundkörpers bei einem Wechsel der Funktionskomponente als solches nicht ändert. Wenn es sich bei der Funktionskomponente um eine Funktionskomponente handelt, die vollständig in der Befestigungstasche aufgenommen wird, wird die Außenkontur des Greifergrundkörpers bei einem Wechsel der Funktionskomponente auch nicht aufgrund der Art der Funktionskomponente verändert, d.h. insbesondere nicht vergrößert.

Unter einer manuell lösbaren Befestigung einer Funktionskomponente wird insbesondere verstanden, dass die Befestigungsweise dergestalt ist, dass die Verbindung mittels der Hand eines Benutzers direkt manuell lösbar ist oder allenfalls mittels eines durch einen Benutzer handgeführten manuellen Handwerkzeugs manuell lösbar ist. Dies gewährleistet, dass ein Wechsel der jeweiligen Funktionskomponente durch den Benutzer des Greifers, insbesondere vor Ort der Benutzung des Greifers schnell und mit geringem Aufwand selbst durchgeführt werden kann, ohne dass dazu eine fertigende Bearbeitung an den Greiferbauteilen vorgenommen werden müsste und ohne dass Sonderwerkzeuge, wie diejenigen, die beispielsweise im Werk des Herstellers des Greifers zur Anwendung kommen, benötigt würden.

Die jeweiligen Befestigungstaschen können standardisiert sein. Die jeweiligen Befestigungstaschen können insbesondere in Abhängigkeit der jeweils für sie vorgesehenen Art von Funktionskomponenten unterschiedlich, d.h. in Funktionskomponenten bezogenen Gruppen standardisiert sein. Dies bedeutet, dass die jeweiligen Befestigungstaschen über mehrere Bauarten von Greifertypen hinweg gleich ausgebildet sein können. Im Ergebnis können dieselben Funktionskomponenten wahlweise an einer ersten Art von Greifern, d.h. an einer ersten Art von Grundkörpern verwendet werden oder einer von der ersten Art verschiedenen, zweiten Art von Greifern, d.h. an einer verschiedenen zweiten Art von Grundkörpern verwendet werden.

Die Befestigungstasche kann in einer ersten allgemeinen Ausführungsvariante ein Haltemittel aufweisen und die jeweilige Funktionskomponente ein mit dem Haltemittel der Befestigungstasche in einem befestigten Zustand der Funktionskomponente an der Befestigungstasche zusammenwirkendes Gegenhaltemittel aufweisen, wobei das Haltemittel und das Gegenhaltemittel zum manuell lösbaren Verbinden mittels der Hand eines Benutzers oder mittels eines durch einen Benutzer handgeführten manuellen Handwerkzeugs ausgebildet sind.

Die Befestigungstasche aufweist ein erstes Haltemittel, der Greifer einen Zwischenrahmen umfasst, der ein mit dem ersten Haltemittel der Befestigungstasche in einem befestigten Zustand des Zwischenrahmens an der Befestigungstasche zusammenwirkendes erstes Gegenhaltemittel aufweist, wobei das erste Haltemittel und das erste Gegenhaltemittel zum manuell lösbaren Verbinden mittels der Hand eines Benutzers oder mittels eines durch einen Benutzer handgeführten manuellen Handwerkzeugs ausgebildet sind und der Zwischenrahmen dabei ein zweites Haltemittel aufweist, und die jeweilige Funktionskomponente ein mit dem zweiten Haltemittel des Zwischenrahmens in einem befestigten Zustand der Funktionskomponente an dem Zwischenrahmen zusammenwirkendes zweites Gegenhaltemittel aufweist, wobei das zweite Haltemittel und das zweite Gegenhaltemittel zum manuell lösbaren Verbinden mittels der Hand eines Benutzers oder mittels eines durch einen Benutzer handgeführten manuellen Handwerkzeugs ausgebildet sind.

In einer ersten Variante kann der Zwischenrahmen durch ein Grundrahmenteil gebildet werden, das eine hohe Steifigkeit aufweist. In dieser ersten Variante weist das Grundrahmenteil einen ersten Wandabschnitt und einen zumindest im Wesentlichen parallel und in einem Abstand dazu verlaufenden zweiten Wandabschnitt auf. Der erste Wandabschnitt ist mit dem zweiten Wandabschnitt über einen zentralen Mittenabschnitt verbunden und dadurch in seiner Steifigkeit verstärkt. An den beiden gegenüberliegenden Enden des ersten Wandabschnitts und des zweiten Wandabschnitts ist jeweils ein Federbügelabschnitt ausgebildet. Die Federbügelabschnitte bilden dabei das erste Gegenhaltemittel und erstrecken sich dazu bogenförmig von dem ersten Wandabschnitt und dem zweiten Wandabschnitt bis zum gegenüberliegenden Ende der zweiten Befestigungstasche. Die Federbügelabschnitte spannen den Zwischenrahmen kraftschlüssig in Seitenwänden der zweiten Befestigungstasche ein, wobei die Seitenwände das erste Haltemittel bilden. Insoweit wird durch die Federbügelabschnitte eine Klemmverbindung zwischen dem Zwischenrahmen und der zweiten Befestigungstasche geschaffen.

An dem zentralen Mittenabschnitt ist ein Sitz angeformt an dem sich ein Ende eines beispielsweise als Sensor ausgebildeten Zubehörgeräts abstützt. An seinem anderen Ende kann ein optionales Einstellmittel eingefügt sein, welches das anderen Ende des an einen Stößel ankoppelt, welcher mit dem Motorgehäuse des Antriebsmotors verbunden sein kann. Aufgrund einer beweglichen, insbesondere federvorgespannten Lagerung des Motorgehäuses des Antriebsmotors in dem Greifergrundkörper kann das Motorgehäuse in Abhängigkeit der Seilzugkraft im Greifergrundkörper sich geringfügig verstellen. Diese Verstellung ist ein Maß für die Greifkraft an den beiden Greiferfingern. Der Sensor kann beispielsweise ein Kraftsensor sein, der insbesondere Dehnmesselemente umfassen kann, welche aus einer Verformung eines Messabschnitts (Biegebalken) des Sensors ein Messsignal über die Kraft liefern, die durch den Antriebsmotor über den Stößel auf den Sensor einwirkt.

In einer zweiten Variante kann der Zwischenrahmen durch ein Grundrahmenteil und ein gegenüberliegendes Biegebalkenrahmenteil, sowie einem ersten Haltewandabschnitt, einem zweiten Haltewandabschnitt und zwei Federbügelabschnitten gebildet werden. Die Federbügelabschnitte bilden auch hierbei das erste Gegenhaltemittel und erstrecken sich dazu bogenförmig von dem Grundrahmenteil bis zum Biegebalkenrahmenteil. Die Federbügelabschnitte spannen auch in der zweiten Variante den Zwischenrahmen kraftschlüssig in Seitenwänden der zweiten Befestigungstasche ein, wobei die Seitenwände das erste Haltemittel bilden. Insoweit wird durch die Federbügelabschnitte auch in der zweiten Variante eine Klemmverbindung zwischen dem Zwischenrahmen und der zweiten Befestigungstasche geschaffen.

Der Stößel kann hierbei analog zur ersten Variante mit dem Motorgehäuse des Antriebsmotors verbunden sein. Aufgrund der beweglichen, insbesondere federvorgespannten Lagerung des Motorgehäuses des Antriebsmotors in dem Greifergrundkörper kann das Motorgehäuse in Abhängigkeit der Seilzugkraft im Greifergrundkörper geringfügig verstellt werden. Diese Verstellung ist ein Maß für die Greifkraft an den beiden Greiferfingern.

Das Zubehörgerät kann beispielsweise alternativ zu einem Sensor, insbesondere einem Kraftsensor, in Form eines Eingabegeräts beispielsweise ein elektrischer Schalter sein, wie beispielsweise ein Mikroschalter. Der Stößel drückt dabei gegen die Außenwand des Biegebalkenrahmenteils, so dass sich das Biegebalkenrahmenteil verformt und seinerseits gegen eine Schaltwippe des Eingabegeräts d.h. des elektrischen Schalters drückt. So kann bei Erreichen bzw. Überschreiten einer voreingestellten Auslösekraft ein elektrisches Signal bereitgestellt werden, das beispielsweise von einer Robotersteuerung des Roboters weiterverarbeitet werden kann.

Das Haltemittel und das Gegenhaltemittel, das erste Haltemittel und das erste Gegenhaltemittel, und/oder das zweite Haltemittel und das zweite Gegenhaltemittel können jeweils von einer formschlüssig zusammenwirkenden Rastverbindung, einer kraftschlüssig zusammenwirkenden Klemmverbindung oder einer Gelenkverbindung gebildet werden.

Formschlüssig zusammenwirkende Rastverbindungen können beispielsweise ineinandergreifende Rastmittel oder Rasthaken sein. Entsprechende Rastmittel oder Rasthaken können manuelle Betätigungsmittel aufweisen, welche beispielsweise durch die Hand eines Benutzers betätigt werden können, um die verrastende Verriegelungswirkung des Rastmittels oder des Rasthakens aufheben zu können.

Kraftschlüssig zusammenwirkende Klemmverbindungen können beispielsweise Federmittel aufweisen, welche sich kraftschlüssig an festen Gegenhaltungen abstützen bzw. sich in feste Gegenhaltungen einspreizen.

Kraftschlüssig zusammenwirkende Klemmverbindungen können mit formschlüssig zusammenwirkenden Rastverbindungen kombiniert sein.

Die Gelenkverbindungen können insbesondere Drehlager umfassen, welche manuell lösbar ausgebildet sein können. So können die manuell lösbaren Gelenkverbindungen manuell steckbare Achsen aufweisen. Die manuell steckbaren Achsen können mittels der Hand eines Benutzers oder mittels eines durch einen Benutzer handgeführten manuellen Handwerkzeugs gesteckt oder gelöst werden.

Der Greifergrundkörper kann in einer dritten allgemeinen Ausführungsvariante mindestens zwei sich von der Außenkontur des Greifergrundkörpers nach innen erstreckende Befestigungstaschen aufweisen, die ausgebildet sind zum Aufnehmen und zur manuell lösbaren Befestigung einer Funktionskomponente des Greifers an dem Greifergrundkörper, wobei die mindestens zwei Befestigungstaschen jeweils mindestens eine Zugangsöffnung aufweisen, und wobei die mindestens eine Zugangsöffnung der einen Befestigungstasche an einer von der Zugangsöffnung der anderen Befestigungstasche unterschiedlichen Seiten des Greifergrundkörpers ausgebildet ist.

Indem die eine Zugangsöffnung der einen Befestigungstasche an einer von der Zugangsöffnung der anderen Befestigungstasche unterschiedlichen Seiten des Greifergrundkörpers ausgebildet ist, kann die jeweilige Funktionskomponente wahlweise auf der einen Seite des Greifergrundkörpers angebracht werden oder an der anderen Seite des Greifergrundkörpers angebracht werden. Die Seiten, an denen die jeweilige Funktionskomponente jeweils angebracht werden kann, können voneinander abweichende Orientierungen bzw. Lagen aufweisen. Diese voneinander abweichende Orientierungen bzw. Lagen können sich beispielsweise um 90 Grad unterscheiden, so dass sich zwei rechtwinkelig zueinander verschieden orientierte Befestigungstaschen ergeben.

Wenn die Funktionskomponente beispielsweise ein Befestigungsflansch des Greifers ist, kann der Greifer beispielsweise in zwei verschiedenen Orientierungen, beispielsweise in einer Anordnung vertikal oder in einer anderen Anordnung horizontal an einem Roboter angekoppelt werden.

Wenn die Funktionskomponenten beispielsweise die Greiferfinger des Greifers sind, kann der Greifer beispielsweise in zwei verschiedenen Orientierungen, beispielsweise in einer Anordnung mit vertikalen Greiferfingern oder in einer anderen Anordnung mit horizontalen Greiferfingern konfiguriert werden.

In einer ersten Ausführungsform kann die Funktionskomponente des Greifers ein mit einem den Greifer handhabenden Roboter verbindbarer Befestigungsflansch sein.

Dabei können erste Haltemittel und erste Gegenhaltemittel von jeweils einer formschlüssig zusammenwirkenden Rastverbindung gebildet werden. So können die ersten Gegenhaltemittel des Befestigungsflansches, beispielsweise von vorspringenden Rasthaken gebildet werden, welche in rückspringende Rastnischen der ersten Haltemittel der ersten Befestigungstaschen des Greifergrundkörpers manuell, insbesondere ohne Werkzeug zu benötigen, eingeschoben und darin verrastet werden können.

In einer zweiten Ausführungsform kann die Funktionskomponente des Greifers der Antriebsmotor sein, wobei der Antriebsmotor ein Motorgehäuse aufweist, das in der in der Befestigungstasche aufgenommenen Anordnung des Antriebsmotors verstellbar in der Befestigungstasche gelagert ist, und wobei der Antriebsmotor eine Motorwelle aufweist, auf der eine Seilwinde befestigt ist, die ausgebildet ist, angetrieben durch den Antriebsmotor, ein auf der Seilwinde laufendes Seil mit einer Zugkraft zu beaufschlagen, die vorgesehen ist den wenigstens einen verstellbar gelagerten Greiferfinger zu bewegen.

Der Antriebsmotor kann insbesondere in einer senkrecht zur Drehachse der Motorwelle verlaufenden Richtung verstellbar in der Befestigungstasche gelagert sein. Die verstellbare Lagerung des Antriebsmotors kann mittels einer Federeinrichtung oder Spanneinrichtung in eine Grundstellung des Antriebsmotors bezüglich der Befestigungstasche vorgespannt sein. Vorzugsweise wird die Grundstellung derart konfiguriert und/oder eingerichtet, dass der Antriebsmotor die Grundstellung in der Befestigungstasche einnimmt, wenn keine Zugkraft auf das Seil wirkt oder lediglich eine Zugkraft auf das Seil wirkt, welche nur einer Grundspannung des Seiles entspricht, in welcher keine äußeren Greifkräfte durch ein vom Greifer gegriffenes Greifobjekt auf die Greiferfinger des Greifers einwirken.

Es kann ausreichend sein, wenn die Seilwinde ausgebildet ist, das Seil lediglich um weniger als 360 Grad aufzuwickeln. Je nach Anwendungsfall, d.h. je nach konstruktivem Aufbau der Greiferfinger kann es ausreichend sein, wenn die Seilwinde ausgebildet ist, das Seil lediglich um beispielsweise 180 Grad oder sogar nur 90 Grad aufzuwickeln.

Als Seil werden flexible Zugmittel verstanden, wie beispielsweise Kabel, Drähte oder Schnüre. Sie können unterschiedliche Materialien umfassen, wie beispielsweise Stahl oder Kunststoff, insbesondere Polyamid.

Die Seilwinde kann eine Mitnehmerscheibe aufweisen, welche einen Seilnippelhalter aufweist, der ausgebildet ist, einen endseitigen Seilnippel eines auf der Seilwinde laufenden Seiles mittels der Hand eines Benutzers oder mittels eines durch einen Benutzer handgeführten manuellen Handwerkzeugs manuell lösbar, formschlüssig aufzunehmen.

Die Mitnehmerscheibe kann eine Nabe umfassen, durch welche die Mitnehmerscheibe drehfest auf der Motorwelle des Antriebsmotors befestigt ist. Die Mitnehmerscheibe kann an ihrem Umfang eine zweiseitig begrenzte Nut oder eine einseitig begrenzte Führungskante aufweisen, auf welche sich das Seil bei einer Drehung der Motorwelle und damit bei einer Drehung der Mitnehmerscheibe aufwickelt. Die Nut bzw. die Führungskante kann ein Abrutschen des Seiles von der Mitnehmerscheibe verhindern. Die Nut bzw. die Führungskante kann sich gewindeförmig mit einer Steigung am Umfang der Mitnehmerscheibe erstrecken.

Der Seilnippelhalter der Mitnehmerscheibe ist ausgebildet zur lösbaren Befestigung eines Endes des Seiles oder eines Mittenabschnitts des Seiles, das auf der Mitnehmerscheibe aufgewickelt werden soll. Der Seilnippelhalter kann dazu einen Sitz aufweisen, in dem ein Seilnippel, der an dem Seil befestigt ist, insbesondere der an einem Ende des Seiles befestigt ist, formschlüssig und lösbar aufgenommen werden kann. Indem der Seilnippel bzw. das Seil von dem Seilnippelhalter bzw. von der Mitnehmerscheibe lösbar gehalten ist, kann der Antriebsmotor von dem Seil getrennt werden, beispielsweise um den Antriebsmotor wechseln zu können oder um die Greiferfinger, die mit dem Seil verbunden sind, zusammen mit dem Seil wechseln zu können.

Der Seilnippelhalter und der Seilnippel können ausgebildet sein zum formschlüssigen Ineinandergreifen. Diese formschlüssige Verbindung ist lösbar und zwar vorzugsweise mittels der Hand eines Benutzers oder mittels eines durch einen Benutzer handgeführten manuellen Handwerkzeugs.

In einer dritten Ausführungsform kann die Funktionskomponente des Greifers ein Zubehörgerät sein, insbesondere aus der Gruppe von Zubehörgeräten umfassend einen Sensor, ein Eingabegerät, ein Ausgabegerät, eine Kamera und einen Projektor.

Der Sensor kann beispielsweise ein Kraftsensor oder ein Momentsensor sein. Der Sensor kann beispielsweise ausgebildet sein zum Erfassen einer Kraft oder eines Momentes, welches mit der Kraft oder dem Moment an den Greiferfingern korreliert, welche mit der Greifkraft zusammenhängt, die der Greifer auf ein gegriffenes Objekt ausübt.

Das Eingabegerät kann im einfachsten Fall ein Schalter oder ein Taster sein. Der Schalter kann insbesondere ein elektrischer Schalter sein. Das Eingabegerät kann jedoch beispielsweise auch in Art eines Potentiometers ausgebildet sein, welches nicht zwei einfache Schaltzustände aufweist, wie ein Schalter, sondern auch stetig sich veränderte Messsignale liefern kann, beispielsweise um die momentane Stellung der Greiferfinger relativ zum Greifergrundkörper erfassen zu können.

Das Ausgabegerät kann im einfachsten Fall ein Anzeigemittel sein, beispielsweise in Form eines Leuchtmittels, wie beispielsweise einer Signallampe. Das Ausgabegerät kann aber auch ein Display umfassen, welches komplexere Informationen darstellen kann.

In einer anderen speziellen Ausführung kann die Funktionskomponente ein Projektor sein. Der Projektor kann beispielsweise ausgebildet und eingerichtet sein, eine vorgegebene Struktur, wie beispielsweise eine Liniengitterstruktur auf einen Arbeitsbereich des Greifers zu projizieren. Die Struktur, insbesondere die Liniengitterstruktur kann beispielsweise durch ein Laserlicht des Projektors erzeugt werden. Die Struktur, insbesondere die Liniengitterstruktur kann eine optische Messstruktur bilden, die beispielsweise von einer Kamera erfasst werden kann, um beispielsweise die Topografie des Arbeitsbereiches des Greifers erfassen zu können.

In einer speziellen Ausführung kann die Funktionskomponente somit eine Kamera sein. Neben der Funktion der Kamera zur Erfassung einer von dem Projektor ausgesandten Struktur, kann die Kamera auch anderen Zwecken dienen, so beispielsweise zur optischen Erfassung des Arbeitsbereiches des Greifers als solches (also ohne eine projizierte Struktur), wobei der erfasste Arbeitsbereich dann mittels elektronischer Bildauswertung, die als solches bekannt ist, analysiert werden kann.

In einer vierten Ausführungsform kann die Funktionskomponente des Greifers wenigstens einer der Greiferfinger des Greifers sein, wobei die Befestigungstasche wenigstens ein Haltemittel aufweist und der jeweilige Greiferfinger wenigstens ein mit dem wenigstens einen Haltemittel der Befestigungstasche in einem befestigten Zustand des Greiferfingers an der Befestigungstasche zusammenwirkendes Gegenhaltemittel aufweist, wobei das wenigstens eine Haltemittel und das wenigstens eine Gegenhaltemittel von wenigstens einer Gelenkverbindung gebildet wird.

Wenn die Funktionskomponente des Greifers in Form von mehreren, beispielsweise zwei Greiferfingern ausgebildet ist, können die (wenigstens eine) vierte Befestigungstasche und die (wenigstens eine) fünfte Befestigungstasche jeweils beispielsweise drei mögliche Haltemittel aufweisen.

Ein erster Greiferfinger kann zu den Haltemitteln zugeordnete Gegenhaltemittel aufweisen. Ein zweiter Greiferfinger kann zu den Haltemitteln zugeordnete Gegenhaltemittel aufweisen. Durch die Gegenhaltemittel sind die beiden Greiferfinger an den Haltemitteln der vierten Befestigungstasche und der fünften Befestigungstasche beispielsweise schwenkbar gelagert. Die Gegenhaltemittel des ersten Greiferfingers können mit den Haltemitteln der vierten Befestigungstasche eine Gelenkverbindung bilden, um den Greiferfinger beispielsweise schwenkbar an dem Greifergrundkörper zu lagern. Der erste Greiferfinger kann beispielsweise ein erstes Parallelogrammgelenk aufweisen, das an lediglich zwei von beispielsweise drei vorhandenen Haltemitteln der vierten Befestigungstasche gelagert ist. Das dritte der vierten Haltemittel bleibt im Falle eines solchen Ausführungsbeispiels eines ersten Greiferfingers ungenutzt, kann jedoch Verwendung finden im Falle eines konstruktiv anders ausgebildeten ersten Greiferfingers. In gleicher Weise kann der zweite Greiferfinger ein zweites Parallelogrammgelenk umfassen, das ebenso an lediglich zwei von beispielsweise drei vorhandenen fünften Haltemittel der fünften Befestigungstasche gelagert ist. Das dritte der fünften Haltemittel bleibt im Falle dieses Ausführungsbeispiels eines zweiten Greiferfingers ungenutzt, kann jedoch Verwendung finden im Falle eines konstruktiv anders ausgebildeten zweiten Greiferfingers.

Beispielsweise kann der erste Greiferfinger alternativ als eine starre, unbewegliche Gegenhaltung ausgebildet sein, die eine unbewegliche Greiferbacke bildet, gegen die der schwenkbar gelagerte zweite Greiferfinger bewegt werden kann. In einer Ausgestaltung als starre, unbewegliche Gegenhaltung kann demgemäß der erste Greiferfinger an allen dreien der vierten Haltemittel befestigt sein und zwar starr verbunden mit dem Greifergrundkörper. Mit der zusätzlichen Festlegung des ersten Greiferfingers zusätzlich an dem dritten der vierten Haltemittel kann demgemäß eine Schwenkbarkeit des ersten Greiferfingers unterbunden werden. Dazu könnte beispielsweise eine Schraube durch das zusätzliche dritte der vierten Haltemittel geschraubt werden, um den ersten Greiferfingers festzulegen. Eine solche Schraube könnte mit einem einfachen Handwerkzeug auf einfache Weise manuell durch einen Benutzer angebracht und auch wieder entfernt werden. In demselben Sinne kann auch jeweils der komplette Greiferfinger mit einem einfachen Handwerkzeug auf einfache Weise manuell durch einen Benutzer an dem Greifergrundkörper angebracht und auch wieder von dem Greifergrundkörper entfernt werden, oder durch einen anders gestalteten Greiferfinger ersetzt werden, beispielsweise durch Fin-Ray-Greiferfinger oder durch anthropomorphische Mehrgliederfinger, insbesondere durch Seilzug betätigte anthropomorphische Mehrgliederfinger.

Mit den erfindungsgemäßen Lösungen können Greifersysteme geschaffen werden, die anwendungsspezifisch sowohl vom Nutzer als auch vom Hersteller sehr frei konfiguriert und rekonfiguriert werden können und über die besondere Art des Aufbaus und der einfachen Gleichteile sehr kostengünstig hergestellt werden können. Die erfindungsgemäßen Lösungen umfassen auch eine neuartige Messanordnung, die es ermöglicht speziell bei seilaktuierten Greiferfingern die Greifkraft sensitiv zu ermitteln und/oder in einer vorteilhaften Variante, die Greifkraft zu begrenzen.

Die Flexibilität liegt im Wesentlichen in einem frei aufbaubaren Greifergrundkörper, d.h. einem Greiferrahmen, der in einer oder in mehreren der folgenden Funktionen diverse Optionen in der Gesamtkonfiguration bieten kann:
Einheitliche Befestigungstaschen an unterschiedlichen Seiten oder an unterschiedlichen Positionen können eine einfache und werkzeugfreie Befestigung von beispielsweise zusätzlichen Sensoren, Eingabe- und Anzeigegeräten insbesondere von 3D-Kameras und Projektoren ermöglichen. Außerdem kann ein einfaches und gegebenenfalls werkzeugfreies Befestigen des gesamten Greifers am Roboterflansch erfolgen, beispielsweise sowohl in vertikaler als auch in horizontaler oder anderweitig orientierter Lage. Die mechanische Verbindung kann beispielsweise analog eines schiebenden Bajonettverschlusses aus mehreren, beispielsweise vier Taschen und vier vorspringenden Befestigungselementen, wie beispielsweise Rasthaken, bestehen, die formflüssig in fünf Freiheitsgrade ineinander geschoben werden können. Der schiebende letzte Freiheitsgrad kann z.B. über eine Magnet- oder Schnappverbindung verriegelt werden.

In einer Variante können drei Anbindungsachsen oder Gelenkpunkte für Greiferfinger ermöglichen, dass nicht nur die Greifbacken, sondern die gesamte Fingerkinematik gezielt getauscht werden kann. Damit kann der Greifer mit verschiedenen Arten von Greiferfingern konfiguriert werden und in Folge sehr unterschiedliche Greifbackenbewegungen durchführen, beispielsweise mit variablen Öffnungsweiten und angepassten Greifkräften, je nach entsprechender Ausbildung der Führungskinematik und der Kraftübersetzung. Ebenso sind natürlich auch die Backen der Greiferfinger anpassbar. So kann beispielsweise bei gleichem Antrieb einfach zwischen Parallelogramm-Aufbau beispielsweise mit Fin-Ray-Backen oder formadaptiven Fingern gewechselt werden.

Verschiedene Einsätze seitlich am Rahmen können unterschiedliche Arten ermöglichen, die Greifkraft zu bestimmen bzw. zu begrenzen.

Eine beispielhafte Art eines Einsatzes ist ein eindimensionaler Kraftsensor beispielsweise zur Druckkraftmessung an einem Führungssteg. Dies ermöglicht eine Überwachung und Messung der schließenden Greifkraft über den gesamten Bewegungsbereich.

Eine beispielhafte andere Art eines Einsatzes ist ein Einsatz mit Taster und Feder, vorzugsweise Blattfeder, zur Bestimmung einer Überschreitung einer definierten Greifkraft.

Neben dem besonderen Aufbau des Rahmens d.h. des Greifergrundkörpers, ist vor allem der Aufbau des Antriebsstranges inklusive der Motoraufhängung vorteilhaft.

Die Aktuierung der Greiferfinger kann dabei beispielsweise einseitig mittels Zugmittel erfolgen, insbesondere mittels einem Seil, welches auf einer Antriebswelle des Motors aufgewickelt wird. Die Seilenden der Greiferfinger können dabei über spezielle keilförmige Mitnehmerscheiben fest auf der Welle verankert sein. Der Motor kann in einem speziellen Motorträger sitzen, welcher ein weiteres Stützlager am Ende der Motorwelle aufnimmt und damit die Motorlagerung entlastet, und/oder eine Aufnahme für einen Positionssensor der Motorwelle, beispielsweise stirnseitig der Motorwelle, besitzt, und/oder einen flachen Führungssteg aufweisen kann, welcher beispielsweise in einer Nut im Rahmen so geführt wird, dass er unter Motorlast nicht quer verkippen oder verkannten kann und eine Bewegung nach oben, in Fingerrichtung, zulässt. Nach unten ist die Bewegung durch einen Anschlag begrenzt.

Eine biegeelastische, aber torsionssteife Motorhalteraufhängung kann unter Seillast eine Verformung und damit Verkippung des Motors insbesondere der Motorwelle mit Seilbefestigung in Richtung der Finger zulassen, wodurch der Führungssteg in der Nut nach oben geschoben und/oder geschwenkt wird.

Die obere Seite des Führungsstegs kann dabei einen abgeflachten Bereich aufweisen, welcher bei Auslenkungen gegen einen Sensor drückt, und entweder direkt gegen einen Kraftsensor oder gegen eine Feder, insbesondere Blattfeder wirkt, welche nach einer Verformung beispielsweise einen Taster auslöst. Eine solche Kraftmessung am Führungssteg ermöglicht über die Hebelverhältnisse eine Berechnung der Seilkraft an der Motorwelle, die wiederum zur Bestimmung der Greifkraft erforderlich ist.

Konkrete Ausführungsbeispiele der Erfindung sind in der nachfolgenden Beschreibung unter Bezugnahme auf die beigefügten Figuren näher erläutert.

Es zeigen:
- Fig. 1: eine perspektivische Darstellung eines beispielhaften Greifers mit einem erfindungsgemäßen Grundkörper,
- Fig. 2: eine perspektivische Darstellung eines beispielhaften Greifers mit einem erfindungsgemäßen Grundkörper, bei dem die Funktionskomponente ein Befestigungsflansch des Greifers ist,
- Fig. 3: eine perspektivische Darstellung eines beispielhaften Greifers mit einem erfindungsgemäßen Grundkörper, an einem Roboterflansch mit mehreren verschiedenen beispielhaften Funktionskomponenten,
- Fig. 4: eine perspektivische Darstellung eines beispielhaften Greifers mit einem erfindungsgemäßen Grundkörper, bei dem die Funktionskomponente ein Antriebsmotor des Greifers ist, dem eine weitere Funktionskomponente in Form eines Kraftsensors zugeordnet ist,
- Fig. 5: eine perspektivische Darstellung eines beispielhaften Greifers mit einem erfindungsgemäßen Grundkörper, bei dem die Funktionskomponente ein Antriebsmotor des Greifers ist, dem eine weitere Funktionskomponente in Form eines elektrischen Schalters zugeordnet ist,
- Fig. 6: eine Schnittdarstellung durch den Antriebsmotor und den Greifergrundkörper,
- Fig. 7a: eine perspektivische Darstellung eines beispielhaften Antriebsmotors mit einer Seilwinde,
- Fig. 7b: eine perspektivische Darstellung der Seilwinde gemäß Fig. 7a in Alleinstellung,
- Fig. 8: eine perspektivische Darstellung eines Greifers mit einem Greifergrundkörper in den ein Zwischenrahmen eingesetzt ist, in dem eine weitere Funktionskomponente in Form eines Kraftsensors gehalten ist, und
- Fig. 9: eine perspektivische Darstellung eines Greifers mit einem Greifergrundkörper in den ein Zwischenrahmen eingesetzt ist, in dem eine weitere Funktionskomponente in Form eines elektrischen Schalters gehalten ist.

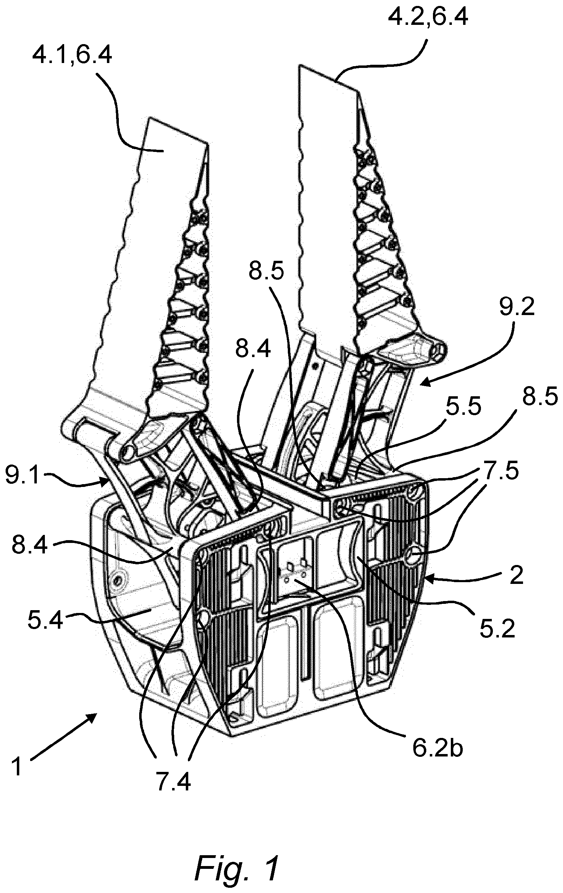

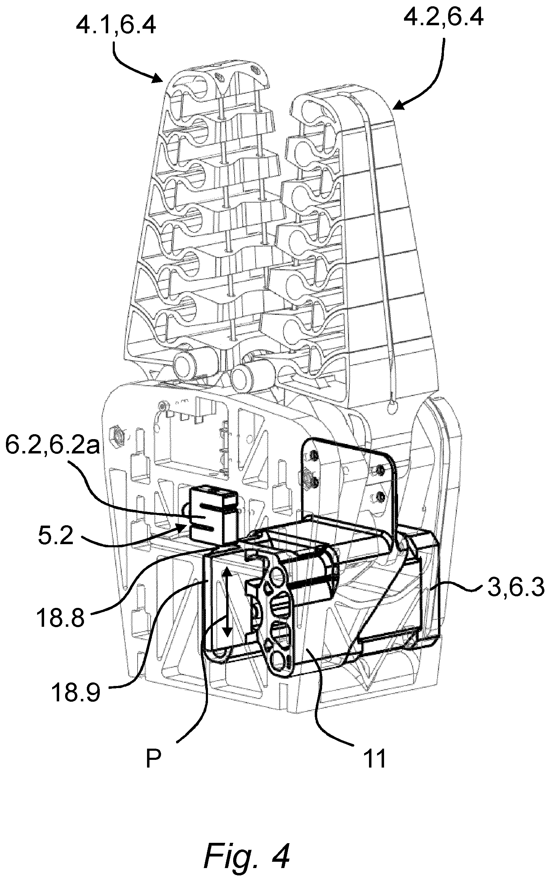

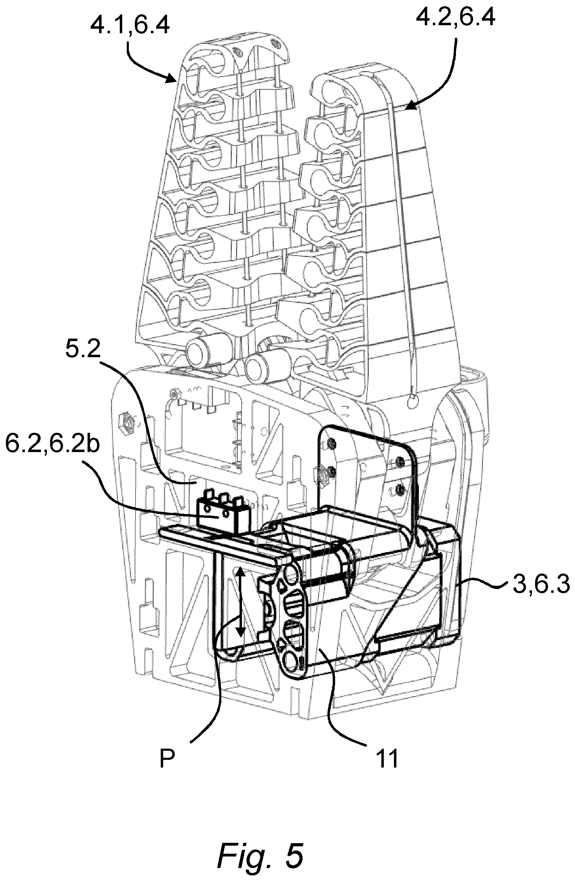

In der Fig. 1 ist eine beispielhafte Ausführungsform eines erfindungsgemäßen Greifers 1 dargestellt. Der Greifer 1 weist einen Greifergrundkörper 2 auf, einen am Greifergrundkörper 2 angeordneten Antriebsmotor 3 (Fig. 4 und Fig. 5) und wenigstens ein Paar von Greiferfingern 4.1 und 4.2, die an dem Greifergrundkörper 2 gelagert sind.

Im Falle des vorliegenden Ausführungsbeispiels sind die beiden Greiferfinger 4.1 und 4.2 von dem Antriebsmotor 3 gemeinsam angetrieben verstellbar am Greifergrundkörper 2 gelagert. Die Greiferfinger 4.1 und 4.2 sind im Falle des vorliegenden Ausführungsbeispiels schwenkbar am Greifergrundkörper 2 gelagert.

Durch eine von dem Antriebsmotor 3 angetriebene Bewegung der beiden Greiferfinger 4.1 und 4.2 wird der Greifer 1 geöffnet und geschlossen. Erfindungsgemäß weist der Greifergrundkörper 2 wenigstens eine sich von der Außenkontur des Greifergrundkörpers 2 nach innen erstreckende Befestigungstasche 5 auf, die ausgebildet ist zum Aufnehmen und zur manuell lösbaren Befestigung einer Funktionskomponente 6 des Greifers 1 an dem Greifergrundkörper 2.

Die Funktionskomponente 6 kann ein Befestigungsflansch 6.1, eine Zubehörgerät 6.2, ein Antriebsmotor 6.3 oder ein Greiferfinger 6.4 sein. Das Zubehörgerät 6.2 kann beispielsweise ein Sensor 6.2a, ein Eingabegerät 6.2b, ein Ausgabegerät 6.2c, eine Kamera 6.2d und/oder ein Projektor 6.2e sein. Der Antriebsmotor 6.3 kann der Antriebsmotor 3 sein, welcher ausgebildet ist zum Bewegen der Greiferfinger 4.1 und 4.2. Die Greiferfinger 6.4 als Funktionskomponente 6 können die Greiferfinger 4.1 und 4.2 sein.

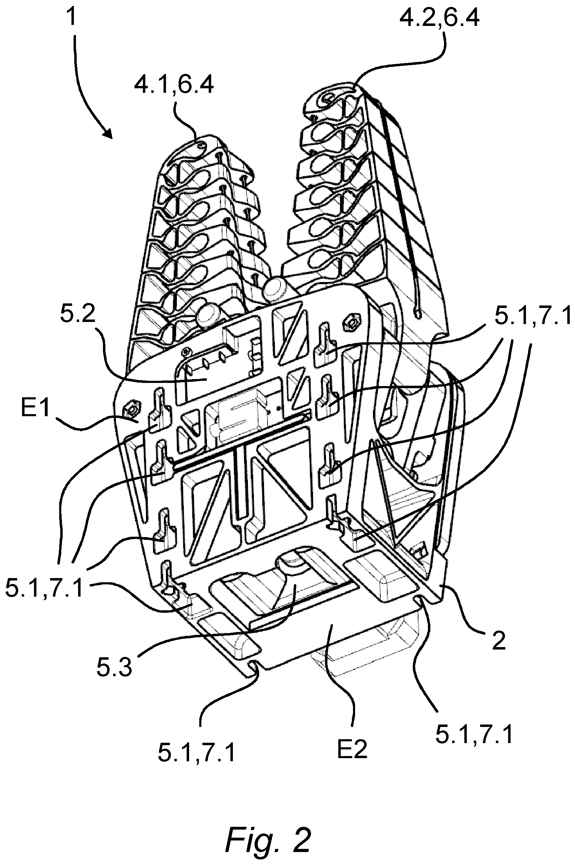

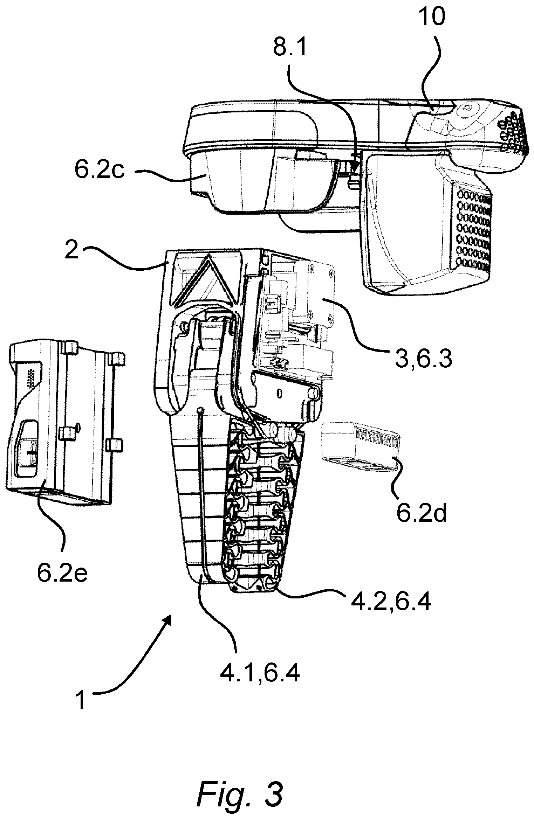

Mehrere erste Befestigungstaschen 5.1 (Fig. 2) können ausgebildet sein zum Aufnehmen des Befestigungsflansches 6.1 (Fig. 3). Eine zweite Befestigungstasche 5.2 (Fig. 1) kann ausgebildet sein zum Aufnehmen des Zubehörgeräts 6.2. Eine dritte Befestigungstasche 5.3 (Fig. 2) kann ausgebildet sein zum Aufnehmen des Antriebsmotors 6.3. Eine vierte Befestigungstasche 5.4 (Fig. 1) und eine fünfte Befestigungstasche 5.5 (Fig. 1) können ausgebildet sein zum Aufnehmen jeweils eines Greiferfinger 6.4, d.h. jeweils des Greiferfingers 4.1 und des Greiferfingers 4.2.

Die Fig.1 zeigt die Funktionskomponente 6 des Greifers 1 in Form der beiden Greiferfinger 4.1 und 4.2 bzw. 6.4. Die vierte Befestigungstasche 5.4 und die fünfte Befestigungstasche 5.5 weisen jeweils drei mögliche Haltemittel 7.4 und 7.5 auf.

Der erste Greiferfinger 4.1 weist zu den Haltemitteln 7.4 zugeordnete Gegenhaltemittel 8.4 auf. Der zweite Greiferfinger 4.2 weist zu den Haltemitteln 7.5 zugeordnete Gegenhaltemittel 8.5 auf. Durch die Gegenhaltemittel 8.4 und 8.5 sind die beiden Greiferfinger 4.1 und 4.2 an den Haltemitteln 7.4 und 7.5 der vierten Befestigungstasche 5.4 und der fünften Befestigungstasche 5.5 schwenkbar gelagert. Die Gegenhaltemittel 8.4 des ersten Greiferfingers 4.1 bilden mit den Haltemitteln 7.4 der vierten Befestigungstasche 5.4 eine Gelenkverbindung, um den Greiferfinger 4.1 schwenkbar an dem Greifergrundkörper 2 zu lagern. In der in Fig. 1 gezeigten Ausführungsform weist der erste Greiferfinger 4.1 ein erstes Parallelogrammgelenk 9.1 auf, das an lediglich zwei der drei vorhandenen Haltemitteln 7.4 der vierten Befestigungstasche 5.4 gelagert ist. Das dritte der vierten Haltemittel 7.4 bleibt im Falle dieses Ausführungsbeispiels eines ersten Greiferfingers 4.1 ungenutzt, kann jedoch Verwendung finden im Falle eines konstruktiv anders ausgebildeten ersten Greiferfingers 4.1. In gleicher Weise umfasst der zweite Greiferfinger 4.2 ein zweites Parallelogrammgelenk 9.2, das ebenso an lediglich zwei der drei vorhandenen fünften Haltemittel 7.5 der Befestigungstasche 5.5 gelagert ist. Das dritte der fünften Haltemittel 7.5 bleibt im Falle dieses Ausführungsbeispiels eines zweiten Greiferfingers 4.2 ungenutzt, kann jedoch Verwendung finden im Falle eines konstruktiv anders ausgebildeten zweiten Greiferfingers 4.2.

Beispielsweise könnte der erste Greiferfinger 4.1 als eine starre, unbewegliche Gegenhaltung ausgebildet sein, die eine unbewegliche Greiferbacke bildet, gegen die der schwenkbar gelagerte zweite Greiferfinger 4.2, wie dargestellt, bewegt werden könnte. In einer Ausgestaltung als starre, unbewegliche Gegenhaltung könnte demgemäß der erste Greiferfinger 4.1 an allen dreien der dargestellten vierten Haltemittel 7.4 befestigt sein und zwar starr verbunden mit dem Greifergrundkörper 2. Mit der zusätzlichen Festlegung des ersten Greiferfingers 4.1 zusätzlich an dem dritten der vierten Haltemittel 7.4 kann demgemäß eine Schwenkbarkeit des ersten Greiferfingers 4.1 unterbunden werden. Dazu könnte beispielsweise eine nicht näher dargestellte Schraube durch das zusätzliche dritte der vierten Haltemittel 7.4 geschraubt werden, um den ersten Greiferfingers 4.1 festzulegen. Eine solche Schraube könnte mit einem einfachen Handwerkzeug auf einfache Weise manuell durch einen Benutzer angebracht und auch wieder entfernt werden. In demselben Sinne kann auch der komplette Greiferfinger 4.1 oder 4.2 mit einem einfachen Handwerkzeug auf einfache Weise manuell durch einen Benutzer an dem Greifergrundkörper 2 angebracht und auch wieder von dem Greifergrundkörper 2 entfernt werden.

Die Fig.2 und Fig. 3 zeigen die Funktionskomponente 6 des Greifers 1 in Form eines Befestigungsflansches 6.1. Der Befestigungsflansch 6.1 ist mit einem den Greifer 1 handhabenden Roboter 10 verbunden.

Der Befestigungsflansch 6.1 weist mehrere erste Gegenhaltemittel 8.1 auf, welche mit ersten Haltemittel 7.1 der ersten Befestigungstaschen 5.1 zusammenwirken.

Die ersten Befestigungstaschen 5.1 weisen demgemäß erste Haltemittel 7.1 auf und der Befestigungsflansch 6.1 weist die mit den ersten Haltemitteln 7.1 der ersten Befestigungstaschen 5.1 in einem befestigten Zustand des Greifers 1 an dem Roboter 10 zusammenwirkenden ersten Gegenhaltemittel 8.1 auf, wobei die ersten Haltemittel 7.1 und die ersten Gegenhaltemittel 8.1 zum manuell lösbaren Verbinden mittels der Hand eines Benutzers oder mittels eines durch einen Benutzer handgeführten manuellen Handwerkzeugs ausgebildet sind.

Dazu können die ersten Haltemittel 7.1 und die ersten Gegenhaltemittel 8.1 von jeweils einer formschlüssig zusammenwirkenden Rastverbindung gebildet werden. So können die ersten Gegenhaltemittel 8.1 des Befestigungsflansches 6.1, beispielsweise wie in Fig. 3 dargestellt ist, von vorspringenden Rasthaken gebildet werden, welche in rückspringende Rastnischen der ersten Haltemittel 7.1 der ersten Befestigungstaschen 5.1 des Greifergrundkörpers 2 manuell, insbesondere ohne Werkzeug zu benötigen, eingeschoben und darin verrastet werden können.

Die Fig. 2 verdeutlicht außerdem, wie der Greifergrundkörper 2 sich von der Außenkontur des Greifergrundkörpers 2 nach innen erstreckende erste Befestigungstaschen 5.1 aufweisen kann, die ausgebildet sind zum Aufnehmen und zur manuell lösbaren Befestigung des Befestigungsflansches 6.1 als eine Funktionskomponente 6 des Greifers 1 an dem Greifergrundkörper 2, wobei die ersten Befestigungstaschen 5.1, jeweils in Gruppen, jeweils mehrere Zugangsöffnung aufweisen, wobei die mehreren Zugangsöffnungen der einen Gruppe von ersten Befestigungstaschen 5.1 an einer von den mehreren Zugangsöffnungen der anderen Gruppe von ersten Befestigungstaschen 5.1 unterschiedlichen Seite des Greifergrundkörpers 2 ausgebildet sind. Die eine Gruppe liegt demgemäß in einer ersten Ebene E1, die rechtwinkelig zu einer zweiten Ebene E2 der anderen Gruppe von ersten Befestigungstaschen 5.1 liegt.

Die Fig.4 und Fig. 5 zeigen die Funktionskomponente 6 des Greifers 1 in Form des Antriebsmotors 3, 6.3. Der Antriebsmotor 3, 6.3 weist ein Motorgehäuse 11 auf, das in der in der dritten Befestigungstasche 5.3 (Fig. 2) aufgenommenen Anordnung des Antriebsmotors 3, 6.3 in der Pfeilrichtung P verstellbar in der dritten Befestigungstasche 5.3 gelagert ist.

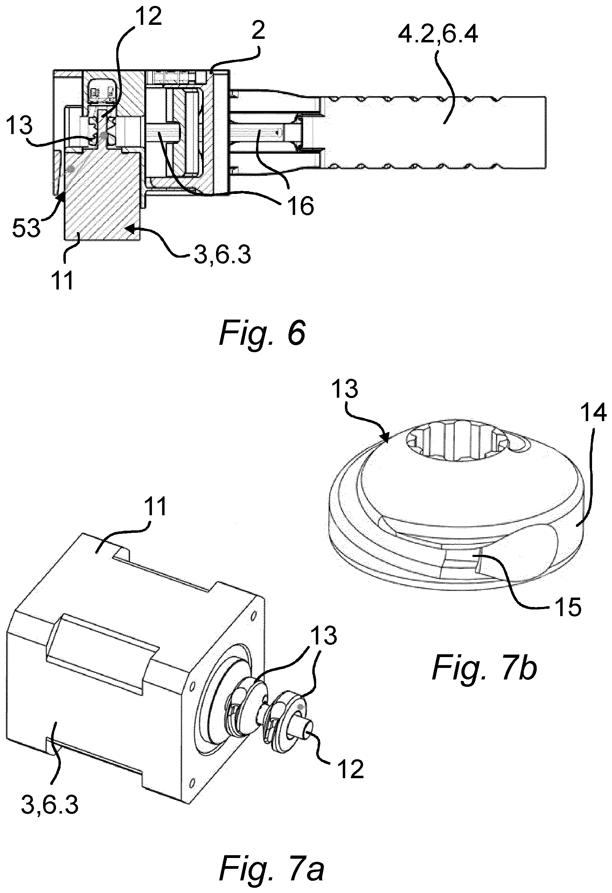

Wie in Fig.6 und Fig. 7a ersichtlich ist, weist im Falle des vorliegenden Ausführungsbeispiels der Antriebsmotor 3, 6.3 eine Motorwelle 12 auf, auf der eine Seilwinde 13 befestigt ist, die ausgebildet ist, angetrieben durch den Antriebsmotor 3, 6.3, ein auf der Seilwinde 13 laufendes Seil mit einer Zugkraft zu beaufschlagen, die vorgesehen ist, den wenigstens einen verstellbar gelagerten Greiferfinger 4.1, 4.2 zu bewegen.

Die Fig.7a und Fig. 7b zeigen, wie die Seilwinde 13 eine Mitnehmerscheibe 14 aufweist, welche einen Seilnippelhalter 15 aufweist, der ausgebildet ist, einen endseitigen Seilnippel eines auf der Seilwinde 13 laufenden Seiles 16 mittels der Hand eines Benutzers oder mittels eines durch einen Benutzer handgeführten manuellen Handwerkzeugs manuell lösbar, formschlüssig aufzunehmen.

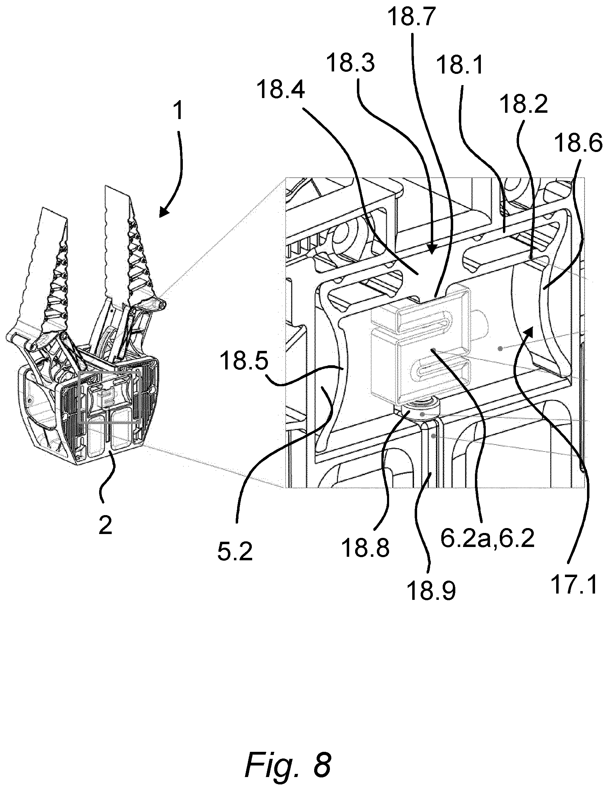

Die Fig. 8 zeigt den Greifer 1 mit dem Greifergrundkörper 2 und einer ersten Variante eines in die zweite Befestigungstasche 5.2 eingesetzten ersten Zwischenrahmens 17.1. Der erste Zwischenrahmen 17.1 wird gebildet durch ein Grundrahmenteil 18.3, das eine hohe Steifigkeit aufweist. Dazu weist das Grundrahmenteil 18.3 einen ersten Wandabschnitt 18.1 und einen zumindest im Wesentlichen parallel und in einem Abstand dazu verlaufenden zweiten Wandabschnitt 18.2 auf. Der erste Wandabschnitt 18.1 ist mit dem zweiten Wandabschnitt 18.2 über einen zentralen Mittenabschnitt 18.4 verbunden und dadurch in seiner Steifigkeit verstärkt. An den beiden gegenüberliegenden Enden des ersten Wandabschnitts 18.1 und des zweiten Wandabschnitts 18.2 ist jeweils ein Federbügelabschnitt 18.5 und 18.6 ausgebildet. Die Federbügelabschnitte 18.5 und 18.6 erstrecken sich dazu bogenförmig von dem ersten Wandabschnitt 18.1 und dem zweiten Wandabschnitt 18.2 bis zum gegenüberliegenden Ende der zweiten Befestigungstasche 5.2. Die Federbügelabschnitte 18.5 und 18.6 spannen den ersten Zwischenrahmen 17.1 kraftschlüssig in der zweiten Befestigungstasche 5.2 ein. Insoweit wird durch die Federbügelabschnitte 18.5 und 18.6 eine Klemmverbindung zwischen dem ersten Zwischenrahmen 17.1 und der zweiten Befestigungstasche 5.2 geschaffen.

An dem zentralen Mittenabschnitt 18.4 ist ein Sitz 18.7 angeformt an dem sich ein Ende eines als Sensor 6.2a ausgebildeten Zubehörgerät 6.2 abstützt. An seinem anderen Ende ist ein Einstellmittel 18.8 eingefügt, welches das andere Ende des Sensors 6.2a an einen Stößel 18.9 ankoppelt, welcher mit dem Motorgehäuse 11 des Antriebsmotors 3 verbunden ist (Fig. 4). Aufgrund einer beweglichen, insbesondere federvorgespannten Lagerung des Motorgehäuses 11 des Antriebsmotors 3 in dem Greifergrundkörper 2, wird das Motorgehäuse 11 in Abhängigkeit der Seilzugkraft im Greifergrundkörper 2 geringfügig verstellt. Diese Verstellung ist ein Maß für die Greifkraft an den beiden Greiferfingern 4.1 und 4.2. Der Sensor 6.2a kann beispielsweise ein Kraftsensor sein, der insbesondere Dehnmesselemente umfassen kann, welche aus einer Verformung eines Messabschnitts (Biegebalken) des Sensors 6.2a ein Messsignal über die Kraft liefern, die durch den Antriebsmotor 3 über den Stößel 18.9 auf den Sensor 6.2a einwirkt.

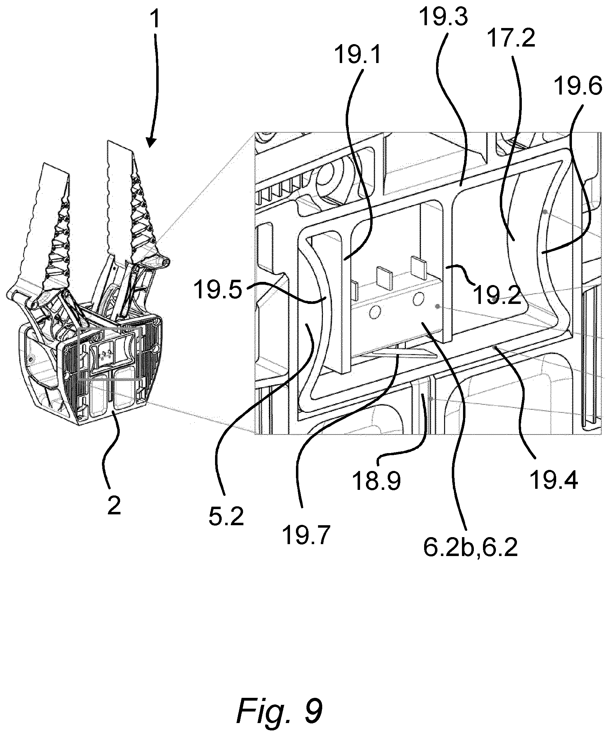

Die Fig. 9 zeigt den Greifer 1 mit dem Greifergrundkörper 2 und einer zweiten Variante eines in die zweite Befestigungstasche 5.2 eingesetzten zweiten Zwischenrahmens 17.2. Der zweite Zwischenrahmen 17.2 wird gebildet durch ein Grundrahmenteil 19.3 und ein gegenüberliegendes Biegebalkenrahmenteil 19.4, sowie einem ersten Haltewandabschnitt 19.1, einem zweiten Haltewandabschnitt 19.2 und zwei Federbügelabschnitte 19.5 und 19.6. Die Federbügelabschnitte 19.5 und 19.6 erstrecken sich dazu bogenförmig von dem Grundrahmenteil 19.3 bis zum Biegebalkenrahmenteil 19.4. Die Federbügelabschnitte 19.5 und 19.6 spannen den zweiten Zwischenrahmen 17.2 kraftschlüssig in der zweiten Befestigungstasche 5.2 ein. Insoweit wird durch die Federbügelabschnitte 19.5 und 19.6 eine Klemmverbindung zwischen dem zweiten Zwischenrahmen 17.2 und der zweiten Befestigungstasche 5.2 geschaffen.

Der Stößel 18.9 kann hierbei analog zur ersten Variante mit dem Motorgehäuse 11 des Antriebsmotors 3 verbunden sein (Fig. 4). Aufgrund der beweglichen, insbesondere federvorgespannten Lagerung des Motorgehäuses 11 des Antriebsmotors 3 in dem Greifergrundkörper 2, wird das Motorgehäuse 11 in Abhängigkeit der Seilzugkraft im Greifergrundkörper 2 geringfügig verstellt. Diese Verstellung ist ein Maß für die Greifkraft an den beiden Greiferfingern 4.1 und 4.2.

Das Zubehörgerät 6.2 in Form eines Eingabegeräts 6.2b kann beispielsweise ein elektrischer Schalter, wie beispielsweise ein Mikroschalter, sein. Der Stößel 18.9 drückt dabei gegen die Außenwand des Biegebalkenrahmenteils 19.4, so dass sich das Biegebalkenrahmenteil 19.4 verformt und seinerseits gegen eine Schaltwippe 19.7 des Eingabegeräts 6.2b d.h. des elektrischen Schalters drückt. So kann bei Erreichen bzw. Überschreiten einer voreingestellten Auslösekraft ein elektrisches Signal bereitgestellt werden, das beispielsweise von einer Robotersteuerung des Roboters 10 weiterverarbeitet werden kann.

## Patentansprüche

1. Greifer, aufweisend einen Greifergrundkörper (2), einen am Greifergrundkörper (2) angeordneten Antriebsmotor (3) und wenigstens ein Paar von Greiferfingern (4.1, 4.2), die an dem Greifergrundkörper (2) gelagert sind, wobei wenigstens einer der Greiferfinger (4.1, 4.2) von dem Antriebsmotor (3) angetrieben verstellbar am Greifergrundkörper (2) gelagert ist, derart, dass durch eine von dem Antriebsmotor (3) angetriebene Bewegung des wenigstens einen Greiferfingers (4.1, 4.2) der Greifer (1) geöffnet und geschlossen werden kann, wobei der Greifergrundkörper (2) wenigstens eine sich von der Außenkontur des Greifergrundkörpers (2) nach innen erstreckende Befestigungstasche (5.1, 5.2, 5.3, 5.4, 5.5) aufweist, die ausgebildet ist zum Aufnehmen und zur manuell lösbaren Befestigung einer Funktionskomponente (6.1, 6.2, 6.3, 6.4) des Greifers (1) an dem Greifergrundkörper (2),
**dadurch gekennzeichnet, dass** die Befestigungstasche (5.1, 5.2, 5.3, 5.4, 5.5) ein erstes Haltemittel (7.1) aufweist, der Greifer (1) einen Zwischenrahmen (17.1, 17.2) umfasst, der ein mit dem ersten Haltemittel (7.1) der Befestigungstasche (5.1, 5.2, 5.3, 5.4, 5.5) in einem befestigten Zustand des Zwischenrahmens (17.1, 17.2) an der Befestigungstasche (5.1, 5.2, 5.3, 5.4, 5.5) zusammenwirkendes erstes Gegenhaltemittel (8.1) aufweist, wobei das erste Haltemittel (7.1) und das erste Gegenhaltemittel (8.1) zum manuell lösbaren Verbinden mittels der Hand eines Benutzers oder mittels eines durch einen Benutzer handgeführten manuellen Handwerkzeugs ausgebildet sind und der Zwischenrahmen (17.1, 17.2) ein zweites Haltemittel (7.2) aufweist, und die jeweilige Funktionskomponente (6.1, 6.2, 6.3, 6.4) ein mit dem zweiten Haltemittel (7.2) des Zwischenrahmens (17.1, 17.2) in einem befestigten Zustand der Funktionskomponente (6.1, 6.2, 6.3, 6.4) an dem Zwischenrahmen (17.1, 17.2) zusammenwirkendes zweites Gegenhaltemittel (8.2) aufweist, wobei das zweite Haltemittel (7.2) und das zweite Gegenhaltemittel (8.2) zum manuell lösbaren Verbinden mittels der Hand eines Benutzers oder mittels eines durch einen Benutzer handgeführten manuellen Handwerkzeugs ausgebildet sind.

2. Greifer nach Anspruch 1, **dadurch gekennzeichnet, dass** die Befestigungstasche (5.1, 5.2, 5.3, 5.4, 5.5) ein Haltemittel (7.1, 7.2, 7.3, 7.4, 7.5) aufweist und die jeweilige Funktionskomponente (6.1, 6.2, 6.3, 6.4) ein mit dem Haltemittel (7.1, 7.2, 7.3, 7.4, 7.5) der Befestigungstasche (5.1, 5.2, 5.3, 5.4, 5.5) in einem befestigten Zustand der Funktionskomponente (6.1, 6.2, 6.3, 6.4) an der Befestigungstasche (5.1, 5.2, 5.3, 5.4, 5.5) zusammenwirkendes Gegenhaltemittel (8.1, 8.2, 8.3, 8.4, 8.5) aufweist, wobei das Haltemittel (7.1, 7.2, 7.3, 7.4, 7.5) und das Gegenhaltemittel (8.1, 8.2, 8.3, 8.4, 8.5) zum manuell lösbaren Verbinden mittels der Hand eines Benutzers oder mittels eines durch einen Benutzer handgeführten manuellen Handwerkzeugs ausgebildet sind.

3. Greifer nach einem der Ansprüche 1 oder 2, **dadurch gekennzeichnet, dass** das Haltemittel (7.1, 7.2, 7.3, 7.4, 7.5) und das Gegenhaltemittel (8.1, 8.2, 8.3, 8.4, 8.5), das erste Haltemittel (7.1) und das erste Gegenhaltemittel (8.1), und/oder das zweite Haltemittel (7.2) und das zweite Gegenhaltemittel (8.2) von einer formschlüssig zusammenwirkenden Rastverbindung, einer kraftschlüssig zusammenwirkenden Klemmverbindung oder einer Gelenkverbindung gebildet wird.

4. Greifer nach einem der Ansprüche 1 bis 3, **dadurch gekennzeichnet, dass** der Greifergrundkörper (2) mindestens zwei sich von der Außenkontur des Greifergrundkörpers (2) nach innen erstreckende Befestigungstaschen (5.1, 5.2, 5.3, 5.4, 5.5) aufweist, die ausgebildet sind zum Aufnehmen und zur manuell lösbaren Befestigung einer Funktionskomponente (6.1, 6.2, 6.3, 6.4) des Greifers (1) an dem Greifergrundkörper (2), und die mindestens zwei Befestigungstaschen (5.1, 5.2, 5.3, 5.4, 5.5) jeweils mindestens eine Zugangsöffnung aufweisen, wobei die mindestens eine Zugangsöffnung der einen Befestigungstasche (5.1, 5.2, 5.3, 5.4, 5.5) an einer von der Zugangsöffnung der anderen Befestigungstasche (5.1, 5.2, 5.3, 5.4, 5.5) unterschiedlichen Seiten des Greifergrundkörpers (2) ausgebildet ist.

5. Greifer nach einem der Ansprüche 1 bis 4, **dadurch gekennzeichnet, dass** die Funktionskomponente (6.1, 6.2, 6.3, 6.4) des Greifers (1) ein mit einem den Greifer (1) handhabenden Roboter (10) verbindbarer Befestigungsflansch (6.1) ist.

6. Greifer nach einem der Ansprüche 1 bis 4, **dadurch gekennzeichnet, dass** die Funktionskomponente (6.1, 6.2, 6.3, 6.4) des Greifers (1) der Antriebsmotor (3) ist und der Antriebsmotor (3) ein Motorgehäuse (11) aufweist, das in der in der Befestigungstasche (5.1, 5.2, 5.3, 5.4, 5.5) aufgenommenen Anordnung des Antriebsmotors (3) verstellbar in der Befestigungstasche (5.1, 5.2, 5.3, 5.4, 5.5) gelagert ist und der Antriebsmotor (3) eine Motorwelle (12) aufweist, auf der eine Seilwinde (13) befestigt ist, die ausgebildet ist, angetrieben durch den Antriebsmotor (3), ein auf der Seilwinde (13) laufendes Seil (16) mit einer Zugkraft zu beaufschlagen, die vorgesehen ist den wenigstens einen verstellbar gelagerten Greiferfinger (4.1, 4.2) zu bewegen.

7. Greifer nach Anspruch 6, **dadurch gekennzeichnet, dass** die Seilwinde (13) eine Mitnehmerscheibe (14) aufweist, welche einen Seilnippelhalter (15) aufweist, der ausgebildet ist, einen endseitigen Seilnippel eines auf der Seilwinde (13) laufenden Seiles (16) mittels der Hand eines Benutzers oder mittels eines durch einen Benutzer handgeführten manuellen Handwerkzeugs manuell lösbar, formschlüssig aufzunehmen.

8. Greifer nach einem der Ansprüche 1 bis 4, **dadurch gekennzeichnet, dass** die Funktionskomponente (6.1, 6.2, 6.3, 6.4) des Greifers (1) ein Zubehörgerät (6.2) ist, insbesondere aus der Gruppe von Zubehörgeräten (6.2) umfassend einen Sensor (6.2a), ein Eingabegerät (6.2b), ein Ausgabegerät (6.2c), eine Kamera (6.2d) und einen Projektor (6.2e).

9. Greifer nach einem der Ansprüche 1 bis 4, **dadurch gekennzeichnet, dass** die Funktionskomponente (6.1, 6.2, 6.3, 6.4) des Greifers (1) wenigstens einer der Greiferfinger (4.1, 4.2) des Greifers (1) ist, wobei die Befestigungstasche (5.1, 5.2, 5.3, 5.4, 5.5) wenigstens ein Haltemittel (7.1, 7.2, 7.3, 7.4, 7.5) aufweist und der jeweilige Greiferfinger (4.1, 4.2) wenigstens ein mit dem wenigstens einen Haltemittel (7.1, 7.2, 7.3, 7.4, 7.5) der Befestigungstasche (5.1, 5.2, 5.3, 5.4, 5.5) in einem befestigten Zustand des Greiferfingers (4.1, 4.2) an der Befestigungstasche (5.1, 5.2, 5.3, 5.4, 5.5) zusammenwirkendes Gegenhaltemittel (8.1, 8.2, 8.3, 8.4, 8.5) aufweist, wobei das wenigstens eine Haltemittel (7.1, 7.2, 7.3, 7.4, 7.5) und das wenigstens eine Gegenhaltemittel (8.1, 8.2, 8.3, 8.4, 8.5) von wenigstens einer Gelenkverbindung gebildet wird.

## Claims

1. Gripper having a gripper main body (2), having a drive motor (3) which is arranged on the gripper main body (2), and having at least one pair of gripper fingers (4.1, 4.2) which are mounted on the gripper main body (2), wherein at least one of the gripper fingers (4.1, 4.2) is mounted on the gripper main body (2) so as to be adjustable in a manner driven by the drive motor (3), in such a way that, by way of a movement, driven by the drive motor (3), of the at least one gripper finger (4.1, 4.2), the gripper (1) can be opened and closed, wherein the gripper main body (2) has at least one fastening pocket (5.1, 5.2, 5.3, 5.4, 5.5) which extends inwards from the outer contour of the gripper main body (2) and which is configured for receiving and for manually releasable fastening of a functional component (6.1, 6.2, 6.3, 6.4) of the gripper (1) on the gripper main body (2),
**characterized in that** the fastening pocket (5.1, 5.2, 5.3, 5.4, 5.5) has a first holding means (7.1), the gripper (1) comprises an intermediate frame (17.1, 17.2) having a first counterpart holding means (8.1) which interacts with the first holding means (7.1) of the fastening pocket (5.1, 5.2, 5.3, 5.4, 5.5) in a fastened state of the intermediate frame (17.1, 17.2) at the fastening pocket (5.1, 5.2, 5.3, 5.4, 5.5), wherein the first holding means (7.1) and the first counterpart holding means (8.1) are configured for manually releasable connection by means of a hand of a user or by means of a manual handheld tool guided by hand by a user and the intermediate frame (17.1, 17.2) has a second holding means (7.2), and the respective functional component (6.1, 6.2, 6.3, 6.4) has a second counterpart holding means (8.2) which interacts with the second holding means (7.2) of the intermediate frame (17.1, 17.2) in a fastened state of the functional component (6.1, 6.2, 6.3, 6.4) at the intermediate frame (17.1, 17.2), wherein the second holding means (7.2) and the second counterpart holding means (8.2) are configured for manually releasable connection by means of a hand of a user or by means of a manual handheld tool guided by hand by a user.

2. Gripper according to Claim 1, **characterized in that** the fastening pocket (5.1, 5.2, 5.3, 5.4, 5.5) has a holding means (7.1, 7.2, 7.3, 7.4, 7.5) and the respective functional component (6.1, 6.2, 6.3, 6.4) has a second counterpart holding means (8.1, 8.2, 8.3, 8.4, 8.5) which interacts with the holding means (7.1, 7.2, 7.3, 7.4, 7.5) of the fastening pocket (5.1, 5.2, 5.3, 5.4, 5.5) in a fastened state of the functional component (6.1, 6.2, 6.3, 6.4) at the fastening pocket (5.1, 5.2, 5.3, 5.4, 5.5), wherein the holding means (7.1, 7.2, 7.3, 7.4, 7.5) and the counterpart holding means (8.1, 8.2, 8.3, 8.4, 8.5) are configured for manually releasable connection by means of a hand of a user or by means of a manual handheld tool guided by hand by a user.

3. Gripper according to either of Claims 1 and 2, **characterized in that** the holding means (7.1, 7.2, 7.3, 7.4, 7.5) and the counterpart holding means (8.1, 8.2, 8.3, 8.4, 8.5), the first holding means (7.1) and the first counterpart holding means (8.1), and/or the second holding means (7.2) and the second counterpart holding means (8.2) are formed by a latching connection with form-fitting interaction, a clamping connection with force-fitting interaction or a joint connection.

4. Gripper according to one of Claims 1 to 3, **characterized in that** the gripper main body (2) has at least two fastening pockets (5.1, 5.2, 5.3, 5.4, 5.5) which extend inwards from the outer contour of the gripper main body (2) and which are configured for receiving and for manually releasable fastening of a functional component (6.1, 6.2, 6.3, 6.4) of the gripper (1) on the gripper main body (2), and the at least two fastening pockets (5.1, 5.2, 5.3, 5.4, 5.5) each have at least one access opening, wherein the at least one access opening of one fastening pocket (5.1, 5.2, 5.3, 5.4, 5.5) is formed on a side of the gripper main body (2) that is different from the side thereof for the access opening of the other fastening pocket (5.1, 5.2, 5.3, 5.4, 5.5).

5. Gripper according to one of Claims 1 to 4, **characterized in that** the functional component (6.1, 6.2, 6.3, 6.4) of the gripper (1) is a fastening flange (6.1) which is connectable to a robot (10) handling the gripper (1).

6. Gripper according to one of Claims 1 to 4, **characterized in that** the functional component (6.1, 6.2, 6.3, 6.4) of the gripper (1) is the drive motor (3), and the drive motor (3) has a motor housing (11) which is mounted adjustably in the fastening pocket (5.1, 5.2, 5.3, 5.4, 5.5) in the arrangement, received in the fastening pocket (5.1, 5.2, 5.3, 5.4, 5.5), of the drive motor (3), and the drive motor (3) has a motor shaft (12) on which a winch (13) is fastened, this being configured to apply, driven by the drive motor (3), a pulling force to a rope (16) running on the winch (13) that is intended to move the at least one adjustably mounted gripper finger (4.1, 4.2).

7. Gripper according to Claim 6, **characterized in that** the winch (13) has a driver disc (14) having a rope-nipple holder (15) which is configured to receive in a manually releasable and form-fitting manner, by means of a hand of a user or by means of a manual handheld tool guided by hand by a user, an end-side rope nipple of a rope (16) running on the winch (13).

8. Gripper according to one of Claims 1 to 4, **characterized in that** the functional component (6.1, 6.2, 6.3, 6.4) of the gripper (1) is an accessory device (6.2), in particular from the group of accessory devices (6.2) comprising a sensor (6.2a), an input device (6.2b), an output device (6.2c), a camera (6.2d) and a projector (6.2e).

9. Gripper according to one of Claims 1 to 4, **characterized in that** the functional component (6.1, 6.2, 6.3, 6.4) of the gripper (1) is at least one of the gripper fingers (4.1, 4.2) of the gripper (1), wherein the fastening pocket (5.1, 5.2, 5.3, 5.4, 5.5) has at least one holding means (7.1, 7.2, 7.3, 7.4, 7.5), and the respective gripper finger (4.1, 4.2) has at least one counterpart holding means (8.1, 8.2, 8.3, 8.4, 8.5) which interacts with the at least one holding means (7.1, 7.2, 7.3, 7.4, 7.5) of the fastening pocket (5.1, 5.2, 5.3, 5.4, 5.5) in a fastened state of the gripper finger (4.1, 4.2) at the fastening pocket (5.1, 5.2, 5.3, 5.4, 5.5), wherein the at least one holding means (7.1, 7.2, 7.3, 7.4, 7.5) and the at least one counterpart holding means (8.1, 8.2, 8.3, 8.4, 8.5) are formed by at least one joint connection.

## Revendications

1. Pince comprenant un corps de base (2) de pince, un moteur d'entraînement (3) agencé sur le corps de base (2) de pince et au moins une paire de doigts de préhension (4.1, 4.2) qui sont montés sur le corps de base (2) de pince, au moins l'un des doigts de préhension (4.1, 4.2) étant monté de manière réglable sur le corps de base (2) de pince de façon à être entraîné par le moteur d'entraînement (3), de telle sorte que la pince (1) puisse être ouverte et fermée par un mouvement dudit au moins un doigt de préhension (4.1, 4.2), entraîné par le moteur d'entraînement (3), le corps de base (2) de pince comprenant au moins une poche de fixation (5.1, 5.2, 5.3, 5.4, 5.5) s'étendant vers l'intérieur à partir du contour extérieur du corps de base (2) de pince, qui est conçue pour recevoir et fixer de manière manuellement détachable un composant fonctionnel (6.1, 6.2, 6.3, 6.4) de la pince (1) sur le corps de base (2) de pince,
**caractérisée en ce que** la poche de fixation (5.1, 5.2, 5.3, 5.4, 5.5) comprend un premier moyen de retenue (7.1), la pince (1) comprenant une structure intermédiaire (17.1, 17.2) qui présente un premier moyen de retenue opposé (8.2), qui, dans un état de fixation de la structure intermédiaire (17.1, 17.2) sur la poche de fixation (5.1, 5.2, 5.3, 5.4, 5.5), coopère avec le premier moyen de retenue (7.1) de la poche de fixation (5.1, 5.2, 5.3, 5.4, 5.5), le premier moyen de retenue (7.1) et le premier moyen de retenue opposé (8.1) étant conçus pour être reliés de manière manuellement détachable, par la main d'un utilisateur ou au moyen d'un outil manuel guidé à la main par un utilisateur, et la structure intermédiaire (17.1, 17.2) comprend un deuxième moyen de retenue (7.2), et le composant fonctionnel respectif (6.1, 6.2, 6.3, 6.4) comprend un deuxième moyen de retenue opposé (8.2) qui, dans un état de fixation du composant fonctionnel (6.1, 6.2, 6.3, 6.4) à la structure intermédiaire (17.1, 17.2), coopère avec le deuxième moyen de retenue (7.2) de la structure intermédiaire (17.1, 17.2), le deuxième moyen de retenue (7.2) et le deuxième moyen de retenue opposé (8.2) étant conçus pour être reliés de manière manuellement détachable, par la main d'un utilisateur ou au moyen d'un outil manuel guidé à la main par un utilisateur.

2. Pince selon la revendication 1, **caractérisée en ce que** la poche de fixation (5.1, 5.2, 5.3, 5.4, 5.5) comprend un moyen de retenue (7.1, 7.2, 7.3, 7.4, 7.5) et le composant fonctionnel respectif (6.1, 6.2, 6.3, 6.4) comprend un moyen de retenue opposé (8.1, 8.2, 8.3, 8.4, 8.5) qui, dans un état de fixation du composant fonctionnel (6.1, 6.2, 6.3, 6.4) sur la poche de fixation (5.1, 5.2, 5.3, 5.4, 5.5), coopère avec le moyen de retenue (7.1, 7.2, 7.3, 7.4, 7.5) de la poche de fixation (5.1, 5.2, 5.3, 5.4, 5.5), le moyen de retenue (7.1, 7.2, 7.3, 7.4, 7.5) et le moyen de retenue opposé (8.1, 8.2, 8.3, 8.4, 8.5) étant conçus pour être reliés de manière manuellement détachable, par la main d'un utilisateur ou au moyen d'un outil manuel guidé à la main par un utilisateur.

3. Pince selon l'une des revendications 1 ou 2, **caractérisée en ce que** le moyen de retenue (7.1, 7.2, 7.3, 7.4, 7.5) et le moyen de retenue opposé (8.1, 8.2, 8.3, 8.4, 8.5), le premier moyen de retenue (7.1) et le premier moyen de retenue opposé (8.1), et/ou le deuxième moyen de retenue (7.2) et le deuxième moyen de retenue opposé (8.2) sont formés par une liaison par encliquetage coopérant par complémentarité de forme, une liaison par serrage coopérant par adhérence, ou une liaison articulée.

4. Pince selon l'une des revendications 1 à 3, **caractérisée en ce que** le corps de base (2) de pince présente au moins deux poches de fixation (5.1, 5.2, 5.3, 5.4, 5.5) s'étendant vers l'intérieur à partir du contour extérieur du corps de base (2) de pince, qui sont conçues pour recevoir et fixer de manière manuellement détachable un composant fonctionnel (6.1, 6.2, 6.3, 6.4) de la pince (1) sur le corps de base (2) de pince, et lesdites au moins deux poches de fixation (5.1, 5.2, 5.3, 5.4, 5.5) comprennent chacune au moins une ouverture d'accès, ladite au moins une ouverture d'accès de l'une des poches de fixation (5.1, 5.2, 5.3, 5.4, 5.5) étant formée sur un côté du corps de base (2) de pince différent de l'ouverture d'accès de l'autre poche de fixation (5.1, 5.2, 5.3, 5.4, 5.5).

5. Pince selon l'une des revendications 1 à 4, **caractérisée en ce que** le composant fonctionnel (6.1, 6.2, 6.3, 6.4) de la pince (1) est une bride de fixation (6.1) apte à être reliée à un robot (10) manipulant la pince (1).

6. Pince selon l'une des revendications 1 à 4, **caractérisée en ce que** le composant fonctionnel (6.1, 6.2, 6.3, 6.4) de la pince (1) est le moteur d'entraînement (3), et le moteur d'entraînement (3) comprend un boîtier (11) de moteur qui, dans l'agencement du moteur d'entraînement (3) logé dans la poche de fixation (5.1, 5.2, 5.3, 5.4, 5.5), est monté de manière réglable dans la poche de fixation (5.1, 5.2, 5.3, 5.4, 5.5), et le moteur d'entraînement (3) comprend un arbre de moteur (12) sur lequel est fixé un treuil à câble (13) qui est conçu pour être entraîné par le moteur d'entraînement (3) sur un câble (16) circulant sur le treuil à câble (13) avec une force de traction qui est prévue pour déplacer ledit au moins un doigt de préhension (4.1, 4.2) monté de manière réglable.

7. Pince selon la revendication 6, **caractérisée en ce que** le treuil à câble (13) présente un disque d'entraînement (14) qui comprend un support (15) de raccord de câble qui est conçu pour recevoir par complémentarité de forme, de manière manuellement détachable, par la main d'un utilisateur ou au moyen d'un outil manuel guidé à la main par un utilisateur, un raccord de câble situé à l'extrémité d'un câble (16) circulant sur le treuil à câble (13).

8. Pince selon l'une des revendications 1 à 4, **caractérisée en ce que** le composant fonctionnel (6.1, 6.2, 6.3, 6.4) de la pince (1) est un accessoire (6.2), en particulier issu du groupe d'accessoires (6.2) comprenant un capteur (6.2a), un dispositif d'entrée (6.2b), un dispositif de sortie (6.2c), une caméra (6.2d) et un projecteur (6.2e).

9. Pince selon l'une des revendications 1 à 4, **caractérisée en ce que** le composant fonctionnel (6.1, 6.2, 6.3, 6.4) de la pince (1) est au moins l'un des doigts de préhension (4.1, 4.2) de la pince (1), la poche de fixation (5.1, 5.2, 5.3, 5.4, 5.5) comprenant au moins un moyen de retenue (7.1, 7.2, 7.3, 7.4, 7.5), et le doigt de préhension (4.1, 4.2) concerné comprenant au moins un moyen de retenue opposé (8.1, 8.2, 8.3, 8.4, 8.5) qui, dans un état de fixation du doigt de préhension (4.1, 4.2) sur la poche de fixation (5.1, 5.2, 5.3, 5.4, 5.5), coopère avec ledit au moins un moyen de retenue (7.1, 7.2, 7.3, 7.4, 7.5) de la poche de fixation (5.1, 5.2, 5.3, 5.4, 5.5), ledit au moins un moyen de retenue (7.1, 7.2, 7.3, 7.4, 7.5) et ledit au moins un moyen de retenue opposé (8.1, 8.2, 8.3, 8.4, 8.5) étant formés par au moins une liaison articulée.
